# EUROPÄISCHE PATENTSCHRIFT

(11) **EP 3 897 913 B1**
(45) Veröffentlichungstag und Bekanntmachung des Hinweises auf die Patenterteilung: **22.03.2023**
(21) Anmeldenummer: 19812978.5
(22) Anmeldetag: 28.11.2019
(51) Int. Cl.: B01D 37/04, G01N 1/40, B01D 61/18, B01D 61/22, B01D 63/08

(54) **FILTRIERVERFAHREN GEEIGNET ZUR ISOLIERUNG UND/ODER QUANTIFIZIERUNG ZUMINDEST EINER ZU UNTERSUCHENDEN SUBSTANZ AUS EINER PROBE**
FILTERING METHOD SUITABLE FOR ISOLATING AND/OR QUANTIFYING, FROM A SAMPLE, AT LEAST ONE SUBSTANCE TO BE INVESTIGATED
PROCÉDÉ DE FILTRATION APPROPRIÉ POUR ISOLER ET/OU QUANTIFIER AU MOINS UNE SUBSTANCE À ANALYSER PROVENANT D'UN ÉCHANTILLON

(30) Priorität: 18.12.2018 DE 102018132710
(43) Veröffentlichungstag der Anmeldung: 27.10.2021
(73) Patentinhaber: Analytik Jena GmbH, 07745 Jena (DE)
(72) Erfinder: PAULENZ, Christian, 07747 Jena (DE); MÖLLER, Robert, 07743 Jena (DE); KNIPPSCHILD, Claus, 07745 Jena (DE)
(74) Vertreter: Koslowski, Christine Adelheid
(86) Internationale Anmeldenummer: PCT/EP2019/082858
(87) Internationale Veröffentlichungsnummer: WO 2020/126384

(56) Entgegenhaltungen:
- US-A1- 2006 027 500
- US-A1- 2006 157 408

## Beschreibung

Die Erfindung betrifft ein Filtrierverfahren, das zur Isolierung und/oder Quantifizierung einer zu untersuchenden Substanz aus einer Probe dienen kann. Weiter betrifft die Erfindung auch eine Vorrichtung zum Filtrieren einer Probe.

Im Stand der Technik sind eine Vielzahl von Verfahren zur Anreicherung oder Isolierung von in flüssigen Proben vorliegenden Zellen, Zellbestandteilen oder makromolekularen Substanzen bekannt. Manche dieser Verfahren basieren auf einer Festphasenanbindung der Substanzen und anschließende Abtrennung der festen Phase mit der angebundenen Substanz von den übrigen Probenbestandteilen durch mechanische Kräfte, z.B. durch Zentrifugierung oder Magnetkräfte. Beispiele für solche Verfahren sind beispielsweise aus EP 2 998 398 A1, DE 10 2010 031 401 A1 und DE 10 2014 211221 A1 bekannt. In US 2006/027500 A1 wird ein Filtrierverfahren beschrieben. Eine Prüfung bei einem konstantem Druck wird beendet nachdem ein Durchfluss durch einen Filter auf einen vorgegebenen Wert von 1.0 ml/min abgefallen ist. Ein Filtrat hat dann ein Gewicht von 96.4 Gramm.

In DE 10 2007 021 952 A1 ist ein Verfahren zur Anreicherung von Mikrovesikeln für die nachfolgende Isolierung von in den Mikrovesikeln enthaltenen Biomolekülen beschrieben, bei dem eine wässrige Lösung eines Salzes einer Polyuronsäure und eine Substanz, die die Gelbildung/Pelletbildung der Polyuronsäure induziert, zur Probe zugegeben werden, wobei nach einer kurzen Inkubationszeit die Probe zentrifugiert und der Überstand entfernt wird. Das bei der Zentrifugierung gebildete Pellet kann dann weiter bearbeitet und die in den Mikrovesikeln enthaltenen Inhaltsstoffe für Analysezwecke isoliert werden. Die Zentrifugationszeit soll bei diesem Verfahren 10 min betragen.

Zellen oder Zellbestandteile können auch direkt, d.h. ohne vorherige Festphasenanbindung, durch Zentrifugieren der Probe von den übrigen Probenbestandteilen abgetrennt werden.

Eine andere Möglichkeit zur Isolierung von Substanzen aus Proben ist die Filtration. Diese gehört wie die Zentrifugation zu den mechanischen Trennverfahren und findet grundsätzlich in vielen unterschiedlichen Bereichen Anwendung. Beispielsweise wird die Filtration zur Isolation von Zellen, Zellbestandteilen oder makromolekularen Substanzen, z.B. Bio-Polymeren wie Polypeptiden, Proteinen oder Nukleinsäuren, aus einer flüssigen Proben eingesetzt.

Bei typischen Filtrierverfahren wird die Probe, d.h. die die zu isolierende und gegebenenfalls weiter zu untersuchende Substanz enthaltende Suspension oder Dispersion, durch einen Filter geleitet, der dazu eingerichtet ist, einen Anteil der Probe zurückzuhalten und die übrigen Bestandteile der Probe als Filtrat durchzulassen. Die zu isolierende Substanz kann, je nach Anwendungsfall, im Filter zurückbleiben oder im Filtrat vorliegen. Aus dem Stand der Technik sind viele Filtrationsverfahren bekannt. Als Antriebskraft für den Stofftransport durch den Filter kann die Schwerkraft genutzt werden. In manchen Fällen wird auch eine Druckdifferenz zwischen einer Vorderseite und einer der Vorderseite gegenüberliegenden Rückseite des Filters angelegt, so dass der resultierende, über den Filter bestehende Druckgradient zum Stofftransport durch den Filter dient.

DE 10 2007 021952 A1 beschreibt eine Vorrichtung zur Isolierung von Nukleinsäuren aus einer Probenlösung mit zwei über einen Verbindungskanal verbundenen Behältern. In dem Verbindungskanal ist ein Filter aus einem Nukleinsäure adsorbierenden Feststoff angeordnet. Jeweils einer der Behälter wird mittels einer Spritze mit einem Überdruck beaufschlagt, während an den anderen Behälter mittels einer weiteren Spritze ein Unterdruck angelegt wird, um die Probenlösung durch den Filter zu transportieren. Dabei wird Nukleinsäure durch Adsorption im Filter zurückgehalten und so von den übrigen Bestandteilen der Probenlösung isoliert.

Aus EP 1730 273 B1 ist ein Verfahren zur automatischen Isolierung und Reinigung von Nukleinsäure aus einer Nukleinsäure enthaltenden Probe bekannt, wobei eine die Probe enthaltende Flüssigkeit durch einen zwei Öffnungen aufweisenden Behälter geleitet wird, der einen Filter aus einem Nukleinsäure adsorbierenden Feststoff enthält. Zwischen dem Inneren des Behälters und seiner Außenseite wird eine Druckdifferenz erzeugt, die dazu führt, dass die Flüssigkeit aus dem Behälterinneren durch den Filter herausgeleitet wird. Ein im Inneren des Behälters herrschender Druck wird gemessen und auf der Basis des gemessenen Drucks eine Druckänderungsgeschwindigkeit und eine Druckänderungsbeschleunigung berechnet. Erreicht der Druck im Inneren des Behälters einen festgelegten Wert, wird die Druckbeaufschlagung des Behälterinneren gestoppt, z.B. indem die den Druck erzeugende Pumpe abgestellt wird. Aus nach dem Abstellen der Pumpe während des fortgesetzten Durchleitens der Flüssigkeit durch den Filter erfassten Druckmesswerten wird derjenige Zeitpunkt ermittelt, an dem die Druckänderungsbeschleunigung nach Beendigung der Druckbeaufschlagung minimal ist. Dieser Zeitpunkt entspricht demjenigen Zeitpunkt, zu dem die Flüssigkeit vollständig aus dem Behälter ausgeleitet ist, und zu dem entsprechend das Verfahren beendet werden kann. Das Verfahren sieht vor, für den Fall, dass die Druckänderungsbeschleunigung innerhalb einer vorgegebenen Zeitspanne kein Minimum erreicht, eine Fehlermeldung auszugeben, da dies eine Indikation dafür ist, dass der Filter verstopft ist.

Die beschriebenen aus dem Stand der Technik bekannten Trennverfahren, die auf Zentrifugation oder Filtration basieren, bieten keine Möglichkeit, während des laufenden Verfahrens zu überprüfen, ob bereits eine für die weitere Untersuchung ausreichende Menge der zu isolierenden Substanz isoliert wurde. Bei Zentrifugierverfahren gibt es häufig genau zu beachtende Verfahrensvorschriften, die eine bestimmte, auf Erfahrungswerten beruhende Mindestdauer für die Zentrifugierung vorsehen. Erst nach Beendigung der Zentrifugierung nach Ablauf der vorgeschriebenen Mindestdauer kann festgestellt werden, ob die dabei gewonnene Menge der Substanz ausreichend ist, um beispielsweise eine nachfolgende Analyse durchzuführen. Ist dies nicht der Fall, muss das Verfahren wiederholt werden. Gleiches gilt auch bei Verfahren, die eine Festphasenadsorption oder eine Filtrierung umfassen. Enthält eine Probe nur eine geringe Konzentration der Substanz, die zu isolieren ist, kann es erforderlich sein, das Trennverfahren mehrmals zu wiederholen, was entsprechend zeitaufwändig ist. In anderen Fällen kann es sein, dass bereits vor Ablauf der vorgegebenen Mindest-Verfahrensdauer eine ausreichende Menge der zu isolierenden Substanz im Filter oder in einem beim Zentrifugieren abgesetzten Pellet vorliegt. Stünde diese Information bereits während des laufenden Verfahrens zur Verfügung, könnte das Verfahren in diesen Fällen in zeitsparender Weise zu einem früheren Zeitpunkt abgebrochen werden, ohne die Mindestverfahrensdauer abzuwarten.

Auch für eine Automatisierung des Verfahrens ist es wünschenswert, eine Möglichkeit zu schaffen, während der Durchführung des Trennverfahrens einen Zeitpunkt zu ermitteln, zu dem eine bestimmte Mindestmenge der Substanz isoliert wurde. An das Erreichen dieses Zeitpunkts kann ein von einer elektronischen Steuerung verarbeitbares Abbruchkriterium für das Verfahren geknüpft werden.

Die Aufgabe der Erfindung besteht daher darin, ein verbessertes Filtrierverfahren anzugeben, das der Isolierung und/oder Quantifizierung einer zu untersuchenden Substanz einer Probe dienen kann. Das Verfahren soll insbesondere eine Bestimmung eines Endpunkts des Filtrierverfahrens ermöglichen.

Diese Aufgabe wird gelöst durch das Verfahren nach Anspruch 1, sowie durch die Vorrichtung nach Anspruch 11. Vorteilhafte Ausgestaltungen werden in den abhängigen Ansprüchen angegeben.

Das erfindungsgemäße Filtrierverfahren zur Isolierung und/oder Quantifizierung einer zu untersuchenden Substanz aus einer Probe umfasst:
- Einbringen einer ersten Menge der Probe über einen Probeneinlass in ein Filtermodul, das ein Gehäuse mit einer den Probeneinlass bildenden ersten Öffnung und einer von einem Filter abgedeckten zweiten Öffnung, die einen Probenauslass bildet, aufweist, wobei der Filter dazu eingerichtet ist, einen ersten Anteil der Probe zurückzuhalten und einen zweiten Anteil der Probe durchzulassen;
- Leiten der Probe vom Probeneinlass durch den Filter und den Probenauslass durch Anlegen einer Druckdifferenz zwischen einer dem Probeneinlass zugewandten Seite des Filters und einer von dem Probeneinlass abgewandten Seite des Filters, wobei der zweite Anteil der Probe das Filtermodul als Filtrat durch den Probenauslass verlässt;
- Während des Leitens der Probe vom Probeneinlass durch den Filter zum Probenauslass Erfassen einer Serie von zeitlich nacheinander aufgenommenen Messwerten einer Messgröße, die die Druckdifferenz und/oder einen Volumenstrom durch den Filter repräsentiert;
- Vergleichen der Messwerte mit einem vorgegebenen Referenzwert der Messgröße; und
- Wenn aufeinanderfolgend erfasste Messwerte der Messgröße über eine vorgegebene Zeitspanne gleich dem Referenzwert sind und/oder innerhalb eines vorgegebenen Wertebereichs um den Referenzwert liegen, Beenden des Filtrierverfahrens.

Mittels der Erfassung einer Serie von zeitlich nacheinander aufgenommenen Messwerten lässt sich ein zeitlicher Verlauf der über den Filter bestehenden Druckdifferenz oder des Volumenstroms durch den Filter überwachen. Erreicht die die Druckdifferenz und/oder den Volumenstrom durch den Filter repräsentierende Messgröße, also z.B. die Druckdifferenz, der Volumenstrom oder eine mit der Druckdifferenz oder dem Volumenstrom korrelierende, insbesondere von der Druckdifferenz oder dem Volumenstrom abhängige, Messgröße, den Referenzwert und bleibt für eine vorgegebene Zeitspanne im Wesentlichen konstant auf diesem Referenzwert, so dass die aufeinanderfolgend erfassten Messwerte innerhalb des vorgegebenen Wertebereichs (Toleranzbereich) um den Referenzwert liegen, bildet dies das Abbruchkriterium für das Filtrierverfahren. Bei Erfüllung des Abbruchkriteriums kann das Verfahren beendet, und die isolierte Substanz weiterverarbeitet werden.

Das Vorliegen des Abbruchkriteriums ist ein Indikator dafür, dass der Filter einen dem Referenzwert entsprechenden Zustand erreicht hat. Dieser Zustand kann beispielsweise darin bestehen, dass der Filter mit dem darin zurückgehaltenen ersten Anteil der Probe nicht mehr für den zweiten Anteil der Probe durchlässig ist. So ist beispielsweise ein Fluid-Volumenstrom von Null oder nahezu Null durch den Filter ein Indikator dafür, dass der Filter durch den zurückgehaltenen ersten Anteil der Probe, den Filterkuchen, zugesetzt ist. Die Voraussetzung, dass dieser Zustand erreicht wird, ist, dass eine unter anderem durch die Art des ersten Anteils der Probe und durch die Beschaffenheit und Größe des Filters bestimmte Mindeststoffmenge des ersten Anteils der Probe in dem Filter zurückgehalten wird. Im Fall, dass die Messgröße den Fluid-Volumenstrom durch den Filter repräsentiert, kann als Referenzwert entsprechend ein Volumenstrom von Null vorgegeben sein. Erreicht die Messgröße den Referenzwert und behält für eine bestimmte Mindestzeitspanne, nämlich die oben erwähnte für das Verfahren vorgegebene Zeitspanne, diesen Wert im Wesentlichen bei, ist sichergestellt, dass diese Mindeststoffmenge des ersten Anteils der Probe im Filter vorliegt. Das Beenden des Verfahrens erst nach Erfüllung dieses Abbruchkriteriums stellt somit sicher, dass eine Mindestmenge der zu isolierenden Substanz erhalten wurde.

Dies gilt sowohl für den Fall, dass die zu isolierende Substanz in dem im Filter zurückgehaltenen ersten Anteil der Probe enthalten ist, als auch für den Fall, dass die zu isolierende Substanz im Filtrat enthalten ist. In letzterem Fall können die Verfahrensbedingungen, insbesondere die Beschaffenheit des Filters und die angelegte Druckdifferenz, basierend auf Erfahrungswerten oder Voruntersuchungen so gestaltet werden, dass zum Zeitpunkt, zu dem der Filter vollständig durch den ersten Anteil der Probe zugesetzt ist, eine ausreichende Menge an Filtrat und der darin enthaltenen zu isolierenden Substanz vorliegt.

Durch die Überwachung der Messgröße auf das Erreichen des Abbruchkriteriums kann das Zusetzen des Filters während der laufenden Filtration detektiert werden. Enthält die Probe eine hohe Konzentration der zu isolierenden Substanz, ist das Abwarten einer Mindestfiltrierdauer nicht erforderlich. Vielmehr kann das Verfahren nach Erreichen des Abbruchkriteriums beendet werden, was eine erhebliche Zeitersparnis bedeuten kann. Enthält die Probe eine sehr niedrige Konzentration der zu isolierenden Substanz, kann es passieren, dass auch innerhalb einer vorgegebenen Mindestfiltrierdauer noch keine ausreichende Menge der zu isolierenden Substanz im Filter vorliegt. Indem das Verfahren nicht schon nach Ablauf der Mindestfiltrierdauer, sondern erst nach Erreichen des Abbruchkriteriums beendet wird, kann es vermieden werden, dass eine Filtration, die in der Mindestfiltrierdauer keine ausreichende Menge an zu isolierender Substanz erbracht hat, wiederholt werden muss.

Gleichzeitig erlaubt das Verfahren eine Quantifizierung oder Semiquantifizierung der interessierenden Substanz. Durch Voruntersuchungen und Kalibriermessungen lässt sich die zur Erreichung des Abbruchkriteriums erforderliche Mindeststoffmenge des ersten Anteils der Probe ermitteln. Anhand dieser Mindest-Stoffmenge und des eingesetzten Volumens oder der eingesetzten Masse der Probe lässt sich für Proben unbekannter Zusammensetzungen ein Gehalt des ersten Anteils der Probe an der gesamten Probe ermitteln, z.B. ein Massen- oder Volumenanteil oder eine Konzentration. Dieser ist wiederum ein quantitatives Maß für eine Konzentration, einen Massenanteil oder einen Volumenanteil der Substanz in der Probe.

Das Erreichen des Abbruchkriteriums kann von einer elektronischen Steuerung anhand der Messwerte überwacht werden. Dies erlaubt eine automatisierte Durchführung des Verfahrens.

Der Filter kann in einer Ausgestaltung ein Größenausschluss-Filter sein. In einer anderen Ausgestaltung kann der Filter ein den ersten Anteil der Probe adsorbierender Festkörper sein, wobei der Festkörper für den zweiten Anteil der Probe durchlässige Poren aufweist oder eine Schüttung von Festkörper-Partikeln umfasst, zwischen denen der zweite Anteil der Probe durch die Schüttung hindurch geleitet werden kann.

Der Referenzwert kann in einer vorteilhaften Ausgestaltung derjenige Wert sein, den die Messgröße annimmt, wenn der Filter durch den ersten Anteil der Probe so zugesetzt ist, dass der zweite Anteil der Probe und/oder ein zur Druckerzeugung in das Gehäuse eingeleitetes Fluid nicht mehr durch den Filter gelangt.

In einer möglichen Ausgestaltung kann die zu untersuchende Substanz in dem ersten Anteil der Probe, der von dem Filter zurückgehalten wird, enthalten sein. In einem Spezialfall dieser Ausgestaltung kann dieser erste Anteil der Probe identisch mit der zu untersuchenden Substanz sein. Das Verfahren kann für den Fall, dass die zu untersuchende Substanz in dem ersten Anteil der Probe enthalten ist, die folgenden weiteren Schritte umfassen: Nach dem Beenden des Filtrierverfahrens Gewinnen der zu untersuchenden Substanz aus dem in dem Filtermodul vom Filter als Filterkuchen zurückgehaltenen ersten Anteil der Probe. Im Spezialfall, dass der gesamte erste Anteil der Probe die zu untersuchende Substanz ist, umfasst das Gewinnen der zu untersuchenden Substanz das mechanische Herauslösen und/oder Auswaschen der Substanz aus dem Filter. In anderen Fällen ist es möglich, zunächst den ersten Anteil der Probe aus dem Filter zu entnehmen und dann weiter aufzureinigen oder zu präparieren. In manchen Fällen kann der Filterkuchen direkt durch eine Lyse vom Filter eluiert werden.

Ist das Abbruchkriterium erreicht, kann eventuell noch im Filtermodul stromaufwärts des Filters verbliebene Flüssigkeit abpipettiert werden, bevor die zu untersuchende Substanz aus dem in dem Filter zurückgehaltenen ersten Anteil der Probe gewonnen wird.

In einer anderen Ausgestaltung kann die zu untersuchende Substanz in dem Filtrat, also dem zweiten Anteil der Probe, enthalten sein. In diesem Fall wird das während des Filtrierens anfallende Filtrat in einem mit dem Filtermodul verbundenen Auffangbehälter aufgefangen und gegebenenfalls zur Untersuchung der Substanz weiter verarbeitet.

Falls der zweite Anteil der Probe das Filtermodul im Wesentlichen vollständig verlässt bevor aufeinanderfolgend erfasste Messwerte der Messgröße über die vorgegebene Zeitspanne gleich dem Referenzwert sind und/oder innerhalb des vorgegebenen Wertebereichs um den Referenzwert liegen, wird eine zweite Menge der Probe über den Probeneinlass in das Filtermodul eingebracht und vom Probeneinlass durch den Filter und den Probenauslass geleitet. Diese Schritte können so lange wiederholt werden, bis aufeinanderfolgend erfasste Messwerte der Messgröße über die vorgegebene Zeitspanne gleich dem Referenzwert sind und/oder innerhalb des vorgegebenen Wertebereichs um den Referenzwert liegen.

In einer möglichen Ausgestaltung kann das Filtermodul mit einem Auffangbehälter für den zweiten Anteil der Probe verbunden sein, wobei der Auffangbehälter eine mit dem Filtermodul verbindbare Öffnung aufweist, und wobei die von dem Filter abgedeckte zweite Öffnung des Gehäuses des Filtermoduls mit der Öffnung des Auffangbehälters fluchtet, wenn der Auffangbehälter mit dem Filtermodul verbunden ist.

Das Anlegen der Druckdifferenz kann mittels einer mit dem Filtermodul zur Einstellung eines in dem Gehäuse herrschenden Drucks zusammenwirkenden Drucksteuerungsvorrichtung erfolgen.

Die Drucksteuerungsvorrichtung kann dazu eingerichtet sein, in dem Gehäuse des Filtermoduls einen Überdruck zu erzeugen. Ist hier und im Folgenden vom Erzeugen oder Einstellen eines Überdrucks bzw. eines Unterdrucks die Rede, so ist ein Über- oder Unterdruck bezogen auf den jeweils herrschenden Normaldruck gemeint. Unter Normbedingungen ist der Normaldruck definiert als der mittlere Luftdruck der Atmosphäre auf Meereshöhe und beträgt beispielsweise etwa 1 bar. Die Messgröße kann in diesem Fall ein in dem Gehäuse des Filtermoduls herrschender Druck oder eine von dem in dem Gehäuse des Filtermoduls herrschenden Druck abhängige Größe und der Referenzwert ein Druck-Sollwert bzw. ein Sollwert der von dem Druck abhängigen Größe sein.

Zusätzlich oder alternativ kann die Drucksteuerungsvorrichtung zur Einstellung eines in dem Auffangbehälter für den zweiten Anteil der Probe herrschenden Drucks mit dem Auffangbehälter zusammenwirken. Beispielsweise kann sie dazu eingerichtet sein, einen Unterdruck in dem Auffangbehälter zu erzeugen. In diesem Fall kann die Messgröße ein in dem Auffangbehälter herrschender Druck oder eine von dem in dem Auffangbehälter herrschenden Druck abhängige Größe und der Referenzwert ein Druck-Sollwert bzw. ein Sollwert der von dem Druck abhängigen Größe sein.

In allen diesen Ausgestaltungen kann die Drucksteuerungsvorrichtung eine, insbesondere elektropneumatische, Regeleinheit aufweisen, wobei die Messgröße ein von der Regeleinheit ausgegebener Ausgangsdruck oder eine mit dem Ausgangsdruck korrelierende Größe, und der Referenzwert ein Eingangsdruck der Regeleinheit oder eine mit dem Eingangsdruck korrelierende Größe ist. Der Eingangsdruck der Regeleinheit kann einen den in dem Gehäuse des Filtermoduls oder dem Auffangbehälter einzustellenden Druck-Sollwert repräsentierenden Wert aufweisen.

Die Regeleinheit kann beispielsweise ein elektropneumatischer Regler sein. Die erwähnte, mit dem Ausgangsdruck korrelierende Größe kann in diesem Fall ein Ausgabestrom des elektropneumatischen Reglers sein. Entsprechend kann die erwähnte, mit dem Eingangsdruck korrelierende Größe ein Eingangsstrom des elektropneumatischen Reglers sein.

Die Messgröße kann auch ein Filtrat- und/oder Luft-Volumenstrom durch den Filter oder eine einen Filtrat- und/oder Luft-Volumenstrom durch den Filter repräsentierende Größe und der Referenzwert ein Volumenstrom-Wert von Null sein.

Die Substanz kann eine in der Probe enthaltene Partikelsorte, eine Zellart, Zellbestandteile oder eine molekulare, insbesondere makromolekulare, Substanz sein. Die Probe kann eine Suspension oder eine Dispersion sein.

Erfolgt das Anlegen der Druckdifferenz wie weiter oben beschrieben mittels einer mit dem Filtermodul zur Einstellung eines in dem Gehäuse herrschenden Drucks zusammenwirkenden Drucksteuerungsvorrichtung, kann vor dem Öffnen des Gehäuses zum Entfernen des Filterkuchens und/oder vor dem Aufbringen einer zweiten Menge der Probe mittels der Drucksteuerungsvorrichtung der in dem Gehäuse herrschende Überdruck verringert werden. Es ist auch vorteilhaft, bei der Beaufschlagung des Gehäuses mit Überdruck mittels der Drucksteuerungsvorrichtung den in dem Gehäuse herrschenden Überdruck allmählich ausgehend vom Ausgangswert, z.B. kontinuierlich oder stufenweise, zu erhöhen, um abrupte Druckänderungen und damit einhergehende Verwirbelungen der Probe zu vermeiden.

Die erfindungsgemäße Vorrichtung zum Filtrieren einer Probe zur Isolierung und/oder Quantifizierung einer zu untersuchenden Substanz, umfasst:
- ein Filtermodul, das ein Gehäuse mit einer einen Probeneinlass bildenden ersten Öffnung, einem Filter und einer von dem Filter abgedeckten zweiten Öffnung, die einen Probenauslass bildet, aufweist, wobei der Filter dazu ausgestaltet ist, einen ersten Anteil der Probe zurückzuhalten und einen zweiten Anteil der Probe durchzulassen;
- eine Steuereinrichtung, mindestens umfassende eine Drucksteuerungsvorrichtung, wobei die Drucksteuerungsvorrichtung dazu eingerichtet ist, eine Druckdifferenz zwischen einer dem Probeneinlass zugewandten Seite des Filters und einer von dem Probeneinlass abgewandten Seite des Filters zu erzeugen,
wobei die Steuereinrichtung dazu eingerichtet ist, Messwerte einer Messgröße zu erfassen, die die Druckdifferenz und/oder einen Volumenstrom durch den Filter repräsentiert, und wobei die Steuereinrichtung weiter dazu eingerichtet ist, eine Serie von zeitlich nacheinander erfassten Messwerten der Messgröße mit einem vorgegebenen Referenzwert zu vergleichen und festzustellen, wenn aufeinanderfolgend erfasste Messwerte der Messgröße über eine vorgegebene Zeitspanne gleich dem Referenzwert sind und/oder innerhalb eines vorgegebenen Wertebereichs um den Referenzwert liegen.

Vorteilhaft ist die Vorrichtung zur Ausführung des Verfahrens nach einer der voranstehend beschriebenen Ausgestaltungen eingerichtet.

Der Referenzwert kann in einer vorteilhaften Ausgestaltung derjenige Wert sein, den die Messgröße annimmt, wenn der Filter durch den ersten Anteil der Probe so zugesetzt ist, dass der zweite Anteil der Probe und/oder ein zur Druckerzeugung in das Gehäuse eingeleitetes Fluid nicht mehr durch den Filter gelangt.

Die Steuereinrichtung kann mit der Drucksteuerungsvorrichtung identisch sein. Alternativ kann sie neben der Drucksteuerungsvorrichtung zusätzliche Komponenten umfassen. Die Drucksteuerungsvorrichtung kann einen Sensor umfassen, der dazu eingerichtet ist, Messwerte der Messgröße, z.B. Druckmesswerte, zu erfassen. Die Drucksteuerungsvorrichtung kann eine Elektronik umfassen, die der Auswertung der Messwerte, insbesondere dem erwähnten Vergleich mit dem Referenzwert zur Überwachung des Erreichens des Abbruchkriteriums, dient. Die Steuereinrichtung kann aber auch eine zusätzliche Datenverarbeitungselektronik aufweisen, die mit der Drucksteuerungsvorrichtung verbunden ist und die dazu eingerichtet ist, die Signale der Drucksteuerungsvorrichtung und/oder des Sensors zu erfassen und zu verarbeiten. Die Datenverarbeitungselektronik kann dazu dienen, das Erreichen des Abbruchkriteriums zu überwachen.

Die Steuereinrichtung kann auch einen, insbesondere nicht zur Drucksteuerungsvorrichtung gehörenden, Sensor umfassen, der in der Vorrichtung integriert ist, um die Messwerte der Messgröße zu erfassen. Die Steuereinrichtung umfasst in dieser Ausgestaltung eine mit dem Sensor verbundene Datenverarbeitungselektronik, die dazu eingerichtet ist, die Messwerte des Sensors zur Durchführung des Verfahrens zu verarbeiten und festzustellen, wenn aufeinanderfolgend erfasste Messwerte der Messgröße über eine vorgegebene Zeitspanne gleich dem Referenzwert sind und/oder innerhalb eines vorgegebenen Wertebereichs (Toleranzintervall) um den Referenzwert liegen, und somit das Abbruchkriterium für das Filtrierverfahren erreicht ist.

Die Steuereinrichtung kann dazu ausgestaltet sein, die Drucksteuerungsvorrichtung zu steuern, um das Verfahren teil-automatisiert oder vollständig automatisiert auszuführen. Sie kann gleichzeitig als Steuerung für eine vollautomatisierte Durchführung des Verfahrens dienen, indem sie beispielsweise einen Pipettierautomaten steuert, der für das Einbringen der Probe über den Probeneinlass in das Filtermodul eingesetzt wird. Die Steuereinrichtung kann beispielsweise einen Computer, einen Controller oder einen Mikrocontroller und von diesen ausführbare, der Durchführung des erfindungsgemäßen Verfahren dienende Software umfassen.

Die Vorrichtung kann vorteilhaft eine in das Gehäuse des Filtermoduls mündende Fluidleitung zum Einleiten eines Pneumatikfluids, z.B. Druckluft, in das Gehäuse umfassen. Die Drucksteuerungsvorrichtung kann dazu eingerichtet sein, durch Einleiten des Pneumatikfluids in das Gehäuse einen Ausgangsdruck in dem Gehäuse auf einen vorgegebenen Wert zu regeln, um so die Druckdifferenz zwischen der dem Probeneinlass zugewandten Seite des Filters und der vom Probeneinlass abgewandten Seite des Filters zu erzeugen. Der Ausgangsdruck kann ein Überdruck bezogen auf den in der Umgebung herrschenden Atmosphärendruck sein. Vorteilhaft ist das Gehäuse beim Erzeugen des Überdrucks bis auf seine mit dem Filter abgedeckte zweite Öffnung fluiddicht abgeschlossen.

In einer möglichen Ausgestaltung kann die Vorrichtung einen Auffangbehälter für den zweiten Anteil der Probe umfassen, wobei das Filtermodul mit dem Auffangbehälter für den zweiten Anteil der Probe verbunden ist. Der Auffangbehälter kann eine mit dem Filtermodul verbindbare Öffnung aufweisen, wobei die von dem Filter abgedeckte zweite Öffnung des Gehäuses des Filtermoduls mit der Öffnung des Auffangbehälters fluchtet, wenn der Auffangbehälter mit dem Filtermodul verbunden ist. Der Auffangbehälter kann zur Umgebung hin offen sein.

Die Vorrichtung kann eine in den Auffangbehälter mündende Fluidleitung zum Absaugen von Gas, z.B. Luft, aus dem Auffangbehälter umfassen. Die Drucksteuerungsvorrichtung kann zum Einstellen eines vorgegebenen Ausgangsdrucks in dem Auffangbehälter, der ein Unterdruck bezogen auf den in einer Umgebung des Gehäuses herrschenden Atmosphärendruck ist, durch Absaugen des Gases aus dem Auffangbehälter ausgestaltet sein, um so die Druckdifferenz zwischen der dem Probeneinlass zugewandten Seite des Filters und der vom Probeneinlass abgewandten Seite des Filters zu erzeugen. In dieser Ausgestaltung ist das Filtermodul entweder zur Umgebung hin offen oder bis auf die durch den Filter abgedeckte zweite Öffnung gegenüber der Umgebung abgedichtet und mit einer Fluidleitung zur Zuführung von einem Pneumatikfluid, z.B. Druckluft verbunden. In letzterem Fall kann die Drucksteuerungsvorrichtung den Druck sowohl in dem Gehäuse des Filtermoduls als auch in dem Auffangbehälter regeln, um die Druckdifferenz über den Filter einzustellen.

Die Steuereinrichtung kann dazu eingerichtet sein, ein Signal an die Drucksteuerungsvorrichtung und/oder an eine Benutzerschnittstelle der Vorrichtung auszugeben, wenn aufeinanderfolgend erfasste Messwerte der Messgröße über eine vorgegebene Zeitspanne gleich dem Referenzwert sind und/oder innerhalb eines vorgegebenen Wertebereichs um den Referenzwert liegen. Das an die Drucksteuerungsvorrichtung ausgegebene Signal kann ein Steuersignal sein, das die Drucksteuerungsvorrichtung dazu steuert, die Zuführung von Pneumatikfluid in das Gehäuse des Filtermoduls zu beenden. Wird die Druckdifferenz wie voranstehend beschrieben zusätzlich oder alternativ durch Erzeugen eines Unterdrucks in dem Auffangbehälter erzeugt, kann die Steuereinrichtung entsprechend ein Steuersignal an die Drucksteuerungsvorrichtung ausgeben, das die Drucksteuerungsvorrichtung dazu steuert, das Absaugen von Gas aus dem Auffangbehälter zu beenden. Das an die Benutzerschnittstelle ausgegebene Signal kann eine Anzeige auslösen, anhand derer ein Anwender erkennen kann, dass das von der Vorrichtung ausgeführte Filtrierverfahren beendet ist oder beendet werden kann.

Die Drucksteuerungsvorrichtung kann eine, insbesondere elektropneumatische, Regeleinheit aufweisen. Die Messgröße kann in diesem Fall ein von der elektropneumatischen Regeleinheit ausgegebener Ausgangsdruck oder eine mit dem Ausgangsdruck korrelierende Größe und der Referenzwert ein Eingangsdruck der Regeleinheit oder eine mit dem Eingangsdruck korrelierende Größe sein. Der Eingangsdruck der Regeleinheit kann den in dem Gehäuse des Filtermoduls oder dem Auffangbehälter einzustellenden Druck-Sollwert repräsentierenden Wert aufweisen. Ist die Regeleinheit ein elektropneumatischer Regler, kann die erwähnte, mit dem Ausgangsdruck korrelierende Größe ein Ausgabestrom des elektropneumatischen Reglers sein. Entsprechend kann die erwähnte, mit dem Eingangsdruck korrelierende Größe ein Eingangsstrom des elektropneumatischen Reglers sein.

In einer alternativen Ausgestaltung kann die Messgröße ein in dem Gehäuse des Filtermoduls herrschender Druck oder eine von dem in dem Gehäuse des Filtermoduls herrschenden Druck abhängige Größe und der Referenzwert ein Druck-Sollwert sein. Alternativ kann die Messgröße ein in dem Auffangbehälter für das Filtrat herrschender Druck oder eine davon abhängige Größe und der Referenzwert ein entsprechender Druck-Sollwert sein. Zur Erfassung der Messwerte kann die Vorrichtung einen im Gehäuse des Filtermoduls oder im Auffangbehälter angeordneten Drucksensor umfassen.

In einer anderen alternativen Ausgestaltung kann die Messgröße ein Filtrat- und/oder Gas-Volumenstrom durch den Filter oder eine einen Filtrat- und/oder Gas-Volumenstrom durch den Filter repräsentierende Größe und der Referenzwert ein Volumenstrom-Wert von Null ist. In diesem Fall kann die Vorrichtung einen im Bereich des Filters, insbesondere auf der von dem Probeneinlass des Filtermoduls abgewandten Seite des Filters, angeordneten Durchfluss-Messaufnehmer aufweisen.

Die Erfindung wird im Folgenden anhand der in den Figuren dargestellten Ausführungsbeispiele näher erläutert. Gleiche Teile der in den Figuren dargestellten Vorrichtungen sind mit gleichen Bezugszeichen bezeichnet. Es zeigen:
- Fig. 1: eine schematische Längsschnitt-Darstellung der einzelnen Komponenten einer Filtriervorrichtung nach einem ersten Ausführungsbeispiel;
- Fig. 2: eine schematische Längsschnitt-Darstellung der Filtriervorrichtung gemäß Fig. 1 im zusammengesetzten Zustand;
- Fig. 3: eine schematische Darstellung einer Steuerung zur Durchführung eines Filtrierverfahrens mittels der in Fig. 1 und 2 dargestellten Vorrichtung; und
- Fig. 4: eine schematische Darstellung einer alternativen Steuerung zur Durchführung eines Filtrierverfahrens mittels der in Fig. 1 und 2 dargestellten Vorrichtung.

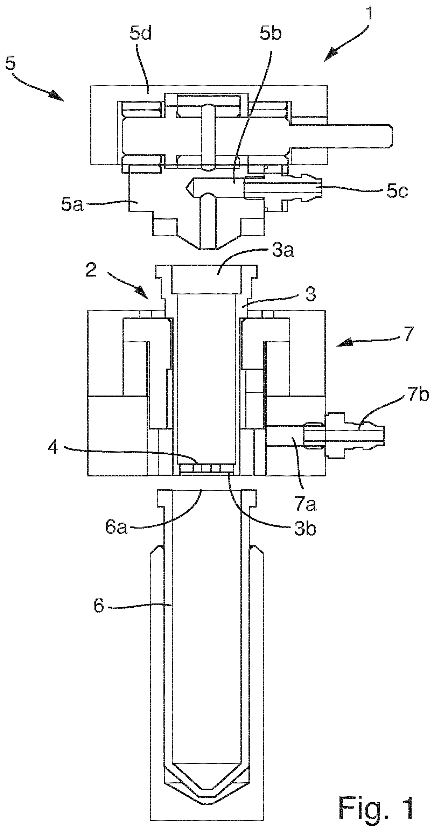

Fig. 1 zeigt eine Vorrichtung 1 zur Durchführung eines Filtrierverfahrens für die Isolierung einer zu untersuchenden Substanz. Die Vorrichtung 1 weist mehrere miteinander wieder lösbar verbindbare Module auf, nämlich ein Filtermodul 2, einen Auffangbehälter 6 und ein Pneumatikmodul 5.

Das Filtermodul 2 umfasst ein Gehäuse 3, das im Wesentlichen in Form eines zylindrischen Hohlkörpers ausgestaltet ist, wobei an einem ersten Ende des zylindrischen Hohlkörpers eine erste Öffnung angeordnet ist, die einen Probeneinlass 3a bildet. Am dem ersten Ende gegenüberliegenden zweiten Ende des zylindrischen Hohlkörpers ist eine zweite Öffnung angeordnet, die von einem Filter 4 abgedeckt ist. Diese zweite Öffnung bilden einen Probenauslass 3b. Im Betrieb der Vorrichtung 1 wird die jeweils zu filtrierende Probe vom Probeneinlass 3a durch den Filter 4 und den Probenauslass 3b geleitet. Der Filter 4 ist dazu ausgestaltet, einen ersten Anteil der Probe zurückzuhalten und einen zweiten Anteil zum Probenauslass 3b passieren zu lassen. Der Filter 4 kann beispielsweise eine Membran, einen Größenausschlussfilter oder einen Festkörper aufweisen, der dazu ausgestaltet ist, den ersten Anteil der Probe zu adsorbieren, und der Kanäle oder Poren aufweist, durch die der zweite Anteil der Probe den Filter 4 passieren kann. Der Filter 4 kann auch durch eine Schüttung von Partikeln eines den ersten Anteil der Probe adsorbierenden Festkörpers gebildet sein.

Im Bereich des Probeneinlasses 3a ist das Filtermodul 2 mit dem Pneumatikmodul 5 verbindbar. Das Pneumatikmodul 5 dient zur Beaufschlagung des Filtermoduls 2 mit einem Überdruck. Im Betrieb wird das Pneumatikmodul 5 über ein Verbindungselement 5a mit dem Filtermodul 2 verbunden, derart, dass die den Probeneinlass 3a bildende erste Öffnung des Gehäuses 3 durch das Pneumatikmodul 5 verschlossen ist. Dabei schließt das Verbindungselement 5a dicht mit dem Gehäuse 3 des Filtermoduls 2 ab. Die einzige Öffnung des Gehäuses 3, über die Fluid aus dem Inneren des Gehäuses 3 in die Umgebung des Filtermoduls 2 gelangen kann, ist dann der durch den Filter 4 abgedeckte Probenauslass 3b.

Das Pneumatikmodul 5 umfasst einen Kanal 5b zur Zuleitung eines Pneumatikfluids, z.B. eines Gases oder Gasgemisches in das Gehäuse 3 des Filtermoduls 2. Vorteilhaft ist die Verwendung von Druckluft als Pneumatikfluid, da diese gut verfügbar ist. Der Kanal 5b ist über eine Schlauchtülle 5c mit einer Drucksteuerungsvorrichtung (nicht in Fig. 1 dargestellt) verbunden. Diese kann beispielsweise einen Druckregler, insbesondere einen elektropneumatischen Regler, umfassen, der zur Druckerzeugung über den Kanal 5b das Pneumatikfluid in das Gehäuse 3 des Filtermoduls leitet. Das Pneumatikmodul 5 umfasst weiter ein Betätigungselement 5d, das mit dem Verbindungselement 5a zusammenwirkt, um dieses gegen den Probeneinlass 3a des Filtermoduls anzupressen.

Zur Vorrichtung 1 gehört auch ein Auffangbehälter 6 mit einem im wesentlichen zylindrischen Gehäuse, das an einem ersten Ende verschlossen ist und an seinem gegenüberliegenden zweiten Ende eine Öffnung 6a aufweist. Die Öffnung 6a kann mit dem auslassseitigen Ende des Gehäuses 3 des Filtermoduls 2 lösbar verbunden werden, so dass aus dem Probenauslass 3b austretendes Fluid, insbesondere der zweite Anteil der Probe oder durch den Filter 4 durchtretendes Pneumatikfluid, in den Auffangbehälter 6 gelangt.

Die Vorrichtung 1 nach dem hier dargestellten Ausführungsbeispiel weist eine mit dem Filtermodul 2 lösbar verbundene Absaugvorrichtung 7 auf. Diese ist optional vorhanden. Die Absaugvorrichtung 7 umfasst in der gezeigten Ausgestaltung einen Abzugkanal 7a, dessen eines Ende über eine Schlauchtülle 7b mit einer Pumpe oder mit der erwähnten Drucksteuerungsvorrichtung verbunden werden kann. Das andere Ende des Abzugkanals 7a kommuniziert im zusammengesetzten Zustand der Vorrichtung 1 und im Betrieb der Vorrichtung mit dem Inneren des Auffangbehälters 6.

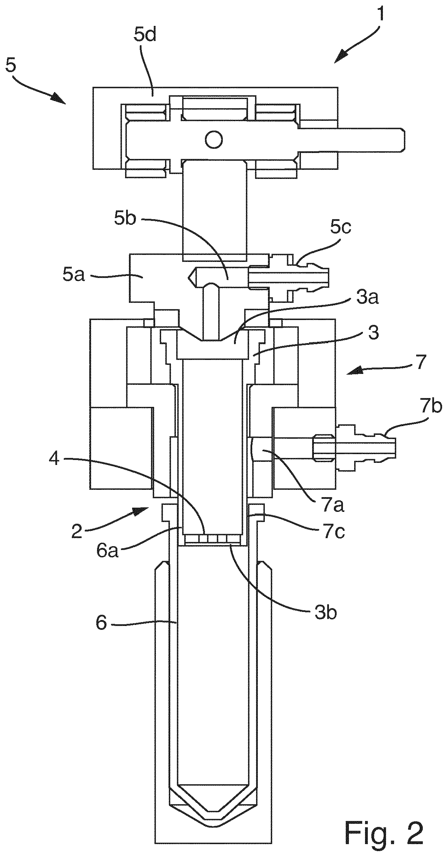

Fig. 2 zeigt eine schematische Längsschnitt-Darstellung der Vorrichtung 1 im zusammengesetzten Zustand. Gleiche Bezugszeichen bezeichnen hier gleiche Teile der Vorrichtung. Zum Verbinden des Pneumatikmoduls 5 mit dem Filtermodul 2 wird das Betätigungselement 5d betätigt, so dass das Betätigungselement 5d eine axial zu einer gedachten Zylinderachse des Filtermoduls 2 ausgerichtete Kraft auf das Verbindungselement 5a ausübt, um dieses gegen den Probeneinlass 3a anzupressen. Das Verbindungselement 5a verschließt die den Probeneinlass 3a bildende Öffnung damit fluiddicht.

Das Filtermodul 2 ist derart mit dem Auffangbehälter 6 verbunden, dass der Probenauslass 3b in den Auffangbehälter 6 hineinragt. Die Außenwandung des Gehäuses 3 des Filtermoduls 2 und die Innenwandung des Auffangbehälters 6 schließen dabei nicht vollständig fluiddicht gegeneinander ab. Vielmehr ist eine Öffnung 7c zwischen dem Gehäuse 3 und dem Auffangbehälter 6 gebildet, die mit dem Abzugkanal 7a der Absaugvorrichtung 7 kommuniziert. Im vorliegenden Ausführungsbeispiel ist die Öffnung 7c in Form eines um die Außenseite des Gehäuses 3 verlaufenden Ringspalts zwischen dem Gehäuse 3 und der Innenseite des Auffangbehälters 6 gebildet. Der Ringspalt sorgt für einen Druckausgleich mit der Umgebung. Durch Absaugen von Gas aus dem Auffangebehälter 6 über den Ringspalt mittels der Absaugvorrichtung 7 kann auch ein Unterdruck in dem Auffangbehälter 6 erzeugt werden.

Im Betrieb der Vorrichtung 1 wird mittels des Pneumatikmoduls 5 ein Überdruck in dem Gehäuse 3 des Filtermoduls 2 erzeugt. Zusätzlich kann optional ein Unterdruck im Auffangbehälter 6 eingestellt werden, indem über die Öffnung 7c und den Abzugskanal 7a Gas aus dem Auffangbehälter 6 abgesaugt wird. Aus dem im Gehäuse 3 eingestellten Überdruck und dem durch die Absaugvorrichtung 7 erzeugten Unterdruck im Bereich des Probenauslasses 3b ergibt sich eine Druckdifferenz zwischen der dem Probeneinlass 3a zugewandten Seite des Filters 4 und der dem Auffangbehälter 6 zugewandten Seite des Filters 4 die den Transport der Probe durch den Filter 4 bewirkt. Es ist alternativ auch möglich, die Absaugvorrichtung 7 nicht zu nutzen oder die Vorrichtung 1 ohne die Absaugvorrichtung 7 auszugestalten. In diesem Fall herrscht in dem mit der Umgebung über die Öffnung 7c kommunizierenden Auffangbehälter 6 Umgebungsdruck (d.h. Normaldruck). Die Druckdifferenz wird in diesem Fall zwischen dem mit Überdruck beaufschlagten Gehäuse 3 und dem in dem Auffangbehälter 6 herrschenden Umgebungsdruck hergestellt.

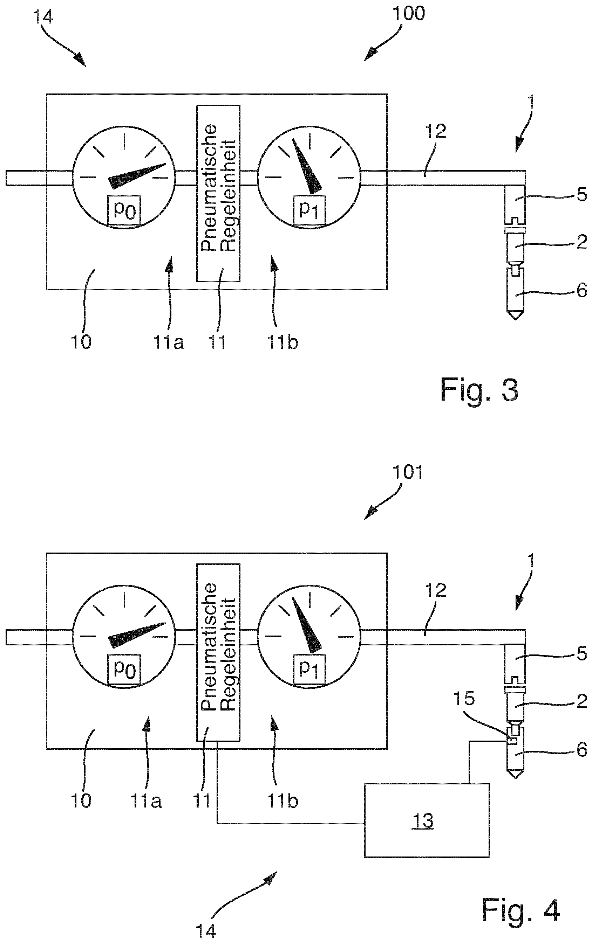

In Fig. 3 ist schematisch eine Vorrichtung 100 zur Durchführung eines Filtrierverfahrens dargestellt, die aus der anhand von Fig. 1 und 2 ausführlich beschriebenen Vorrichtung 1 und einer Steuereinrichtung 14 besteht, wobei die Steuereinrichtung 14 im hier dargestellten ersten Ausführungsbeispiel durch die Drucksteuerungsvorrichtung 10 gebildet ist. Die Drucksteuerungsvorrichtung 10 ist über eine Fluidleitung 12 mit dem Pneumatikmodul 5 der Vorrichtung 1 verbunden und dient zur Einstellung des Überdrucks in dem Gehäuse 3 des Filtermoduls 2. Sie umfasst eine elektropneumatische Regeleinheit 11, die eine Eingangsseite 11a und eine Ausgangsseite 11b aufweist. Die Eingangsseite 11a ist mit einer Pneumatikfluid-Quelle, beispielsweise einer Druckluftquelle, verbunden oder zumindest zeitweise verbindbar. Die Ausgangsseite 11b ist über eine Fluidleitung 12 mit dem Kanal 5b des Pneumatikmoduls 5 verbunden. Die Fluidleitung 12 kann beispielsweise als Schlauch ausgestaltet sein, der mit der Schlauchtülle 5c des Pneumatikmoduls 5 verbunden ist.

An der Eingangsseite 11a der der pneumatischen Regeleinheit 11 liegt ein vorgegebener Eingangsdruck p₀ an. Der Wert des Eingangsdrucks p₀ kann beispielsweise durch einen Anwender der Vorrichtung abhängig von dem zu filtrierenden Medium einstellbar sein. Zur Filtration von Zellen durch einen Größenausschlussfilter kann der vorgegebene Eingangsdruck beispielsweise 0,5 bar Überdruck betragen. Auf ihrer Ausgangsseite 11b gibt die Regeleinheit 11 einen Ausgangsdruck p₁ aus, d.h. sie stellt durch Zuleitung von Pneumatikfluid über die Fluidleitung 12 und das Pneumatikmodul 5 in das Gehäuse 3 des Filtermoduls 2 den Ausgangsdruck p₁ ein. Die pneumatische Regeleinheit 11 ist in an sich bekannter Weise dazu eingerichtet, den Ausgangsdruck p₁ auf den Wert des Eingangsdrucks p₀ zu regeln. Sie umfasst hierzu eine Regelelektronik, die mit einem Ventil verbunden ist, das einen Transport von Pneumatikfluid aus der Pneumatikfluid-Quelle in die Fluidleitung 12 wahlweise sperrt oder freigibt. Die Regelelektronik ist dazu eingerichtet, das Ventil zu betätigen. Die pneumatische Regeleinheit 11 umfasst außerdem einen Drucksensor, der den Ausgangsdruck p₁ erfasst und ein davon abhängiges Signal an die Regelelektronik ausgibt. Basierend auf dem Signal des Drucksensors gibt die Regelelektronik einen Ausgabestrom an das Ventil aus, um dieses zu betätigen. Dieser Ausgabestrom korreliert mit dem aktuellen Ausgangsdruck p₁ und wird von der Regelelektronik basierend auf einem Vergleich mit einem den Eingangsdruck p₀ repräsentierenden Eingangsstrom erzeugt. Die Regeleinheit 11 ist dazu ausgestaltet, mittels des Ventils eine Druckkorrektur des Ausgangsdrucks p₁ vorzunehmen, bis der Ausgangsdruck p₁ gleich dem Eingangsdruck p₀ ist. Die Drucksteuerungsvorrichtung 10 ist dazu eingerichtet, so lange einen Überdruck in dem Gehäuse 3 des Filtermoduls zu erzeugen, bis der Ausgangsdruck p₁ über einen vorgebbaren Zeitraum innerhalb eines ebenfalls vorgebbaren Toleranz-Wertebereichs um den Einangsdruck p₀ liegt. Entsprechend ist die Drucksteuerungsvorrichtung 10 dazu eingerichtet, das Erreichen dieses Abbruchkriteriums anhand eines Vergleichs zwischen dem Eingangsstrom und dem Ausgangsstrom der elektropneumatischen Regeleinheit 11 zu überwachen und festzustellen.

Im Folgenden wird ein Ausführungsbeispiel eines Verfahrens zum Isolieren einer Substanz aus einer Probe mittels der in Fig. 1 bis 3 dargestellten Vorrichtung 100 beschrieben:
Zunächst wird die Probe über den Probeneinlass 3a in das Gehäuse 3 des Filtermoduls 2 gegeben. Dies kann im vorliegenden Beispiel manuell durchgeführt werden, indem eine bestimmte Menge der Probe über den geöffneten Probeneinlass 3a einpipettiert wird. Anschließend wird der Probeneinlass 3a wie weiter oben beschrieben durch Aufsetzen des Pneumatikmoduls 5 dicht verschlossen. Alternativ kann das Pneumatikmodul 5 einen Probenzuleitungs-Kanal umfassen, über den manuell oder automatisiert eine bestimmte Menge der Probe in das Gehäuse 3 des Filtermoduls 2 eingeleitet werden kann. In diesem Fall muss das Pneumatikmodul 5 nicht jedes Mal vom Filtermodul 2 abgenommen werden, wenn eine weitere Menge der Probe in den Probeneinlass 3a eingeleitet wird.

Zum Leiten der Probe durch den Filter 4 wird eine Druckdifferenz zwischen dem Gehäuseinneren des Gehäuses 3 und dem Inneren des Auffangbehälters 6 erzeugt. Dies entspricht dem Einstellen einer Druckdifferenz zwischen der dem Probeneinlass 3a zugewandten Seite des Filters 4 und der vom Probeneinlass 3a abgewandten Seite des Filters 4. Dies geschieht bei der in dem vorliegenden Ausführungsbeispiel verwendeten Vorrichtung durch Einstellen eines Überdrucks im Inneren des Gehäuses 3 des Filtermoduls 2 mittels der Drucksteuerungsvorrichtung 10 und des Pneumatikmoduls 5. Wie erwähnt, kann gleichzeitig mittels einer optionalen Absaugeinrichtung 7 ein Unterdruck im Auffangbehälter 6 erzeugt werden. Dies ist für die Durchführung des Verfahrens nicht unbedingt notwendig. Beim Leiten der Probe durch den Filter 4 wird ein erster Anteil der Probe im Filter 4 zurückgehalten, beispielsweise durch Größenausschluss und/oder durch Adsorption am Filtermaterial, während ein zweiter Anteil der Probe den Filter 4 passiert und als Filtrat im Auffangbehälter 6 aufgefangen wird. Im vorliegenden Beispiel ist die durch Filtration zu isolierende Substanz Bestandteil des ersten Anteils der Probe, der im Filter 4 zurückgehalten wird. Das hier beschriebene Verfahren kann jedoch ganz analog angewendet werden, wenn die zu isolierende Substanz im Filtrat enthalten ist.

Solange ein Volumenstrom der Probe bzw. zumindest des zweiten Anteils der Probe durch den Filter 4 gegeben ist, wird der Ausgangsdruck p₁ der elektropneumatischen Regeleinheit 11 kleiner sein als der Eingangsdruck p₀. Erreicht der Ausgangsdruck p₁ den Wert des Eingangsdrucks p₀, ist dies entsprechend ein Indiz dafür, dass der Filter 4 vollständig verschlossen ist, so dass kein Fluid, d.h. weder Filtrat noch Pneumatikfluid, durch den Filter 4 in den Auffangbehälter 6 gelangt. Besteht diese Druckgleichheit über eine bestimmte Zeitspanne t, die für eine bestimmte Ausgestaltung der Vorrichtung 1, insbesondere einen bestimmten Filter 4 und eine bestimmte Probe, empirisch vorab ermittelt werden kann, so kann von einer ausreichenden Beladung des Filtermaterials mit dem ersten Anteil der Probe und mithin mit der zu isolierenden Substanz ausgegangen werden. In diesem Fall ist ein Abbruchkriterium für das Verfahren erreicht und das Verfahren kann beendet werden.

Das Erreichen dieses Abbruchkriteriums kann basierend auf einem Vergleich des angelegten Eingangsdrucks p₀ mit mittels des Drucksensors der elektropneumatischen Regeleinheit 11 erfassten Messwerten überwacht und festgestellt werden. Es ist auch möglich, einen von der Drucksteuerungsvorrichtung 10 separaten und unabhängigen Drucksensor vorzusehen, der so innerhalb der Vorrichtung 1 angeordnet ist, dass er den im Inneren des Gehäuses 3 des Filtermoduls 2 herrschenden Druck erfasst. Beispielsweise kann ein solcher Drucksensor in der Fluidleitung 12 oder in einer mit der Fluidleitung 12 kommunizierenden Leitung angeordnet sein. Die von diesem Drucksensor erfassten Messwerte können mit dem von der Drucksteuerungsvorrichtung 10 einzustellenden Sollwert, z.B. dem Eingangsdruck p₀ der elektropneumatischen Regeleinheit 11a, verglichen werden.

Die Steuereinrichtung 14, die im vorliegenden Beispiel durch die Drucksteuerungsvorrichtung 10 gebildet ist, kann beispielsweise zur Durchführung des Vergleichs dazu eingerichtet sein zu überprüfen, ob die die nacheinander erfassten Druckmesswerte über die vorgegebene Zeitspanne in einem Toleranzintervall um den Referenzwert liegen, z.B. in einem Intervall von +/- 0,01 bar um den Referenzwert von 0,5 bar. Ist dies der Fall, ist das Abbruchkriterium erreicht.

Die Steuereinrichtung 14 bzw. die Drucksteuerungsvorrichtung 10 kann bei Erreichen des Abbruchkriteriums das Verfahren beenden, indem der in dem Gehäuse 3 des Filtermoduls 2 herrschende Überdruck abgebaut wird, z.B. durch Ableiten von Pneumatikfluid über ein Entlüftungsventil. Die Steuereinrichtung 14 bzw. die Drucksteuerungsvorrichtung 10 kann außerdem ein Signal, z.B. an eine Benutzerschnittstelle, ausgeben, um anzuzeigen, dass das Verfahren beendet ist.

Fällt der Ausgangsdruck p₁ vor Ablauf der vorgegebenen Zeitspanne wieder auf einen Wert unter dem Eingangsdruck p₀ bzw. auf einen Wert außerhalb des Toleranzintervalls ab, ist dies ein Indiz dafür, dass der Filter 4 noch nicht vollständig verschlossen ist, sondern nur eine temporäre Störung der Filtrierung vorlag. In diesem Fall wird das Verfahren weiter fortgesetzt, bis das Abbruchkriterium erreicht ist. Die vorgegebene Zeitspanne kann einige Sekunden betragen.

In einer alternativen Verfahrensausgestaltung können zur Überwachung des Erreichens des Abbruchkriteriums anstelle von Druckmesswerten auch Werte einer mit dem Ausgangsdruck p₁ korrelierenden Größe, z.B. des Ausgabestroms der elektropneumatischen Regeleinheit 11, verwendet werden. In diesem Fall kann als Referenzwert ein Soll-Wert der Größe dienen. Im Fall, dass die überwachte Größe der Ausgabestrom der elektropneumatischen Regeleinheit 11 ist, dient als Referenzwert der Eingangsstrom der elektropneumatischen Regeleinheit, der mit dem Eingangsdruck p₀ korreliert.

Wird das Abbruchkriterium nicht erreicht bevor der gesamte im Filtermodul 2 vorgelegte zweite Anteil der Probe durch den Filter 4 gelaufen ist, kann das bis hierher beschriebene Verfahren so lange mit einer zweiten und gegebenenfalls weiteren Mengen der Probe fortgesetzt werden, bis das Abbruchkriterium erreicht ist. Auf diese Weise ist sichergestellt, dass die im Filter 4 gesammelte Menge der zu isolierenden Substanz für eine weitere Verarbeitung und Analyse ausreicht. In Vorab-Untersuchungen kann darüber hinaus durch eine oder mehrere Kalibriermessungen für eine gegebene Probenart und einen gegebenen Filtertyp ermittelt werden, welche Menge der zu isolierenden Substanz in dem Filter 4 enthalten ist, wenn der Filter durch den ersten Anteil der Probe vollständig verschlossen ist. Mit den so gewonnenen Kalibrierdaten kann der Anteil der zu isolierenden Substanz in einer Probe unbekannter Zusammensetzung quantifiziert werden, indem die bei der Kalibriermessung ermittelte, zum Verschließen des Filters führende Menge des im Filter festgehaltenen Anteils der Probe zur Gesamtmenge der durchgeleiteten Probe unbekannter Zusammensetzung ins Verhältnis gesetzt wird.

Zur weiteren Verarbeitung und Analyse der zu isolierenden Substanz kann nach dem Entfernen des Pneumatikmoduls 5 eventuell in dem Gehäuse 3 verbliebene Flüssigkeit abpipettiert und die zu isolierende Substanz anschließend aus dem Filter 4 gewonnen werden, z.B. durch mechanisches Ablösen und/oder Auswaschen der Substanz aus dem Filter 4. Die Substanz kann auch direkt durch eine Lyse vom Filter 4 eluiert werden.

In Fig. 4 ist schematisch ein weiteres Ausführungsbeispiel einer Vorrichtung 101 zum Filtrieren einer Probe mit einer alternativen Steuerung dargestellt. Die Vorrichtung 1 zur Filtrierung und die Drucksteuerungsvorrichtung 10 sind bei der Vorrichtung 101 im Wesentlichen identisch ausgestaltet wie die in Fig.3 dargestellte Vorrichtung 100 nach dem ersten Ausführungsbeispiel. Gleiche Teile der Vorrichtungen 100 und 101 sind mit identischen Bezugszeichen bezeichnet. Ein Unterschied der in Fig. 4 dargestellten Vorrichtung 101 zu der in Fig. 3 dargestellten Vorrichtung 100 besteht darin, dass die Steuereinrichtung 14 neben der Drucksteuerungsvorrichtung 10 eine separate Datenverarbeitungselektronik 13 aufweist, die mit der Drucksteuerungsvorrichtung 10 zur Kommunikation verbunden ist. Im ersten Ausführungsbeispiel (Fig. 1-3) übernimmt dagegen die Drucksteuerungsvorrichtung 10 im Wesentlichen die Steuerung der Vorrichtung 100. Ein weiterer Unterschied besteht darin, dass in dem Auffangbehälter 6, im Bereich des Filters 4 ein Volumendurchfluss-Sensor 15 angeordnet ist, der Durchfluss-Messwerte an die Datenverarbeitungselektronik 13 der Steuereinrichtung 14 ausgibt. Die Datenverarbeitungselektronik 13 ist dazu ausgestaltet, die erhaltenen Durchfluss-Messwerte mit einem Referenzwert von Null zu vergleichen. Ein mittels der in Fig. 4 dargestellten Vorrichtung durchgeführtes Verfahren kann beendet werden, wenn über eine vorgegebene Zeitspanne ein Volumendurchfluss von im Wesentlichen Null durch den Filter 4 vorliegt. Dies ist ein Indikator dafür, dass der Filter 4 durch den ersten Anteil der Probe zugesetzt ist, so dass der zweite Anteil der Probe oder Pneumatikfluid nicht mehr durch den Filter 4 gelangen. Die Datenverarbeitungselektronik 13 ist daher dazu eingerichtet, dieses Abbruchkriterium zu überwachen. Das Erreichen des Abbruchkriteriums wird von der Datenverarbeitungselektronik 13 erkannt, wenn aufeinanderfolgende Messwerte des Volumendurchflusses über eine vorgegebene Zeitspanne innerhalb eines vorgegebenen Toleranz-Werteintervalls um den Referenzwert liegen. Die Datenverarbeitungselektronik 13 ist weiter dazu eingerichtet, bei Erkennen dieses Abbruchkriteriums ein Steuersignal an die Drucksteuerungsvorrichtung 10 auszugeben, um das Anlegen des Ausgangsdrucks p₁ zu beenden. Gleichzeitig kann sie dazu eingerichtet sein, über eine Benutzerstelle ein Signal auszugeben, das anzeigt, dass das Verfahren beendet ist. Im Übrigen kann das Filtrierverfahren, die Verarbeitung der zu isolierenden Substanz und ggfs. eine Quantifizierung der Substanz in gleicher Weise erfolgen, wie für das Ausführungsbeispiel der Fig. 1 bis 3 beschrieben.

Für den Fachmann sind eine Fülle von Varianten und alternativen Ausgestaltungen der hier beschriebenen Ausführungsbeispiele denkbar, die von der hier beschriebenen Erfindung mit umfasst sind. So kann beispielsweise eine Druckdifferenz zwischen der dem Probeneinlass zugewandten Seite des Filters und der vom Probeneinlass abgewandten Seite erzeugt werden, indem statt eines Überdrucks im Filtermodul ein Unterdruck im Auffangbehälter geregelt wird. In diesem Fall kann der Auffangbehälter gegenüber der Umgebung abgedichtet sein und mit einem Druckregler verbunden sein, der einen vorgebbaren Unterdruck im Auffangbehälter einstellt. Das Gehäuse des Filtermoduls ist in diesem Fall über eine Druckausgleichsleitung z.B. mit der Umgebung der Vorrichtung oder einem Pneumatikfluid-Reservoir verbunden. In dieser Ausgestaltung werden Messwerte des in dem Auffangbehälter herrschenden Drucks erfasst und mit einem Sollwert des in dem Auffangbehälter einzustellenden Unterdrucks verglichen. Das Abbruchkriterium ist in diesem Fall erreicht, wenn die erfassten Druckmesswerte über eine vorgegebene Zeitspanne innerhalb eines Toleranzintervalls um den Sollwert liegen.

## Patentansprüche

1. Filtrierverfahren zur Isolierung und/oder Quantifizierung einer zu untersuchenden Substanz aus einer Probe, umfassend:
- Einbringen einer ersten Menge der Probe über einen Probeneinlass (3a) in ein Filtermodul (2), das ein Gehäuse (3) mit einer den Probeneinlass (3a) bildenden ersten Öffnung und einer von einem Filter (4) abgedeckten zweiten Öffnung, die einen Probenauslass (3b) bildet, aufweist, wobei der Filter (4) dazu eingerichtet ist, einen ersten Anteil der Probe zurückzuhalten und einen zweiten Anteil der Probe durchzulassen, wobei die zu untersuchende Substanz in dem ersten Anteil der Probe oder in dem zweiten Anteil der Probe enthalten ist;
- Leiten der Probe vom Probeneinlass (3a) durch den Filter (4) und den Probenauslass (3b) durch Anlegen einer Druckdifferenz zwischen einer dem Probeneinlass (3a) zugewandten Seite des Filters (4) und einer von dem Probeneinlass (3a) abgewandten Seite des Filters (4), wobei der zweite Anteil der Probe das Filtermodul (2) als Filtrat durch den Probenauslass (3b) verlässt;
- Während des Leitens der Probe vom Probeneinlass (3a) durch den Filter (4) zum Probenauslass (3b) Erfassen einer Serie von zeitlich nacheinander aufgenommenen Messwerten einer Messgröße, die die Druckdifferenz und/oder einen Volumenstrom durch den Filter (4) repräsentiert; und
- Vergleichen der Messwerte mit einem vorgegebenen Referenzwert der Messgröße; **dadurch gekennzeichnet, dass** das Filtrierverfahren zusätzlich folgenden Schritt umfasst:
- Wenn aufeinanderfolgend erfasste Messwerte der Messgröße über eine vorgegebene Zeitspanne gleich dem Referenzwert sind und/oder innerhalb eines vorgegebenen Wertebereichs um den Referenzwert liegen, Beenden des Filtrierverfahrens.

2. Verfahren nach Anspruch 1,
wobei der Referenzwert ein Wert ist, den die Messgröße annimmt, wenn der Filter durch den ersten Anteil der Probe so zugesetzt ist, dass der zweite Anteil der Probe und/oder ein zur Druckerzeugung in das Gehäuse eingeleitetes Fluid nicht mehr durch den Filter gelangt.

3. Verfahren nach Anspruch 1 oder 2, weiter umfassend:
Nach dem Beenden des Filtrierverfahrens Gewinnen der zu untersuchenden Substanz aus dem in dem Filtermodul (2) vom Filter (4) als Filterkuchen zurückgehaltenen ersten Anteil der Probe.

4. Verfahren nach einem der Ansprüche 1 bis 3, weiter umfassend:
Falls der zweite Anteil der Probe das Filtermodul (2) im Wesentlichen vollständig verlässt bevor aufeinanderfolgend erfasste Messwerte der Messgröße über die vorgegebene Zeitspanne gleich dem Referenzwert sind und/oder innerhalb des vorgegebenen Wertebereichs um den Referenzwert liegen, Einbringen einer zweiten Menge der Probe über den Probeneinlass (3a) und Leiten der Probe vom Probeneinlass (3a) durch den Filter (4) und den Probenauslass (3a), und Wiederholen dieser Schritte so lange, bis aufeinanderfolgend erfasste Messwerte der Messgröße über die vorgegebenen Zeitspanne gleich dem Referenzwert sind und/oder innerhalb des vorgegebenen Wertebereichs um den Referenzwert liegen.

5. Verfahren nach einem der Ansprüche 1 bis 4,
wobei das Anlegen der Druckdifferenz mittels einer mit dem Filtermodul (2) zur Einstellung eines in dem Gehäuse herrschenden Drucks zusammenwirkenden Drucksteuerungsvorrichtung (10) erfolgt.

6. Verfahren nach einem der Ansprüche 1 bis 5,
wobei die Messgröße ein in dem Gehäuse (3) des Filtermoduls herrschender Druck oder eine von dem in dem Gehäuse (3) des Filtermoduls herrschenden Druck abhängige Größe und der Referenzwert ein Druck-Sollwert ist.

7. Verfahren nach Anspruch 5 oder 6,
wobei die Drucksteuerungsvorrichtung (10) eine, insbesondere elektropneumatische, Regeleinheit (11) aufweist, und wobei die Messgröße ein von der Regeleinheit (11) ausgegebener Ausgangsdruck (p₁) oder eine mit dem Ausgangsdruck (p₁) korrelierende Größe, und der Referenzwert ein Eingangsdruck (p₀) der Regeleinheit (11) oder eine mit dem Eingangsdruck (p₀) korrelierende Größe ist.

8. Verfahren nach einem der Ansprüche 1 bis 5,
wobei die Messgröße ein Filtrat- und/oder Luft-Volumenstrom durch den Filter (4) oder eine einen Filtrat- und/oder Luft-Volumenstrom durch den Filter (4) repräsentierende Größe und der Referenzwert ein Volumenstrom-Wert von Null ist.

9. Verfahren nach einem der Ansprüche 1 bis 8,
wobei die Substanz eine in der Probe enthaltene Partikelsorte, eine Zellart, Zellbestandteile oder eine molekulare, insbesondere makromolekulare, Substanz ist.

10. Verfahren nach einem der Ansprüche 1 bis 9,
wobei das Anlegen der Druckdifferenz mittels einer mit dem Filtermodul (2) zur Einstellung eines in dem Gehäuse herrschenden Drucks (3) zusammenwirkenden Drucksteuerungsvorrichtung (10) erfolgt, und wobei zum Entnehmen des Filterkuchens und/oder vor dem Aufbringen einer zweiten Menge der Probe mittels der Drucksteuerungsvorrichtung (10) der in dem Gehäuse (3) herrschende Überdruck verringert wird.

11. Vorrichtung (100, 101) zum Filtrieren einer Probe zur Isolierung und/oder Quantifizierung einer zu untersuchenden Substanz, insbesondere nach dem Verfahren nach einem der Ansprüche 1 bis 10, umfassend:
- ein Filtermodul (2), das ein Gehäuse (3) mit einer einen Probeneinlass (3a) bildenden ersten Öffnung, einem Filter (4) und einer von dem Filter (4) abgedeckten zweiten Öffnung, die einen Probenauslass (3b) bildet, aufweist, wobei der Filter (4) dazu ausgestaltet ist, einen ersten Anteil der Probe zurückzuhalten und einen zweiten Anteil der Probe durchzulassen; und
- eine Steuereinrichtung (14), mindestens umfassend eine Drucksteuerungsvorrichtung (10), wobei die Drucksteuerungsvorrichtung (10) dazu eingerichtet ist, eine Druckdifferenz zwischen einer dem Probeneinlass (3a) zugewandten Seite des Filters (4) und einer von dem Probeneinlass (3a) abgewandten Seite des Filters (4) zu erzeugen,
wobei die Steuereinrichtung (14) dazu eingerichtet ist, Messwerte einer Messgröße zu erfassen, die die Druckdifferenz und/oder einen Volumenstrom durch den Filter (4) repräsentiert, wobei die Steuereinrichtung (14) weiter dazu eingerichtet ist, eine Serie von zeitlich nacheinander erfassten Messwerten der Messgröße mit einem vorgegebenen Referenzwert zu vergleichen,
**dadurch gekennzeichnet, dass** die Steuereinrichtung (14) weiter dazu eingerichtet ist, festzustellen,
wenn aufeinanderfolgend erfasste Messwerte der Messgröße über eine vorgegebene Zeitspanne gleich dem Referenzwert sind und/oder innerhalb eines vorgegebenen Wertebereichs um den Referenzwert liegen, und wobei die Steuereinrichtung (14) dazu eingerichtet ist, ein Signal an die Drucksteuerungsvorrichtung (10) und/oder an eine Benutzerschnittstelle der Vorrichtung (1) auszugeben, wenn aufeinanderfolgend erfasste Messwerte der Messgröße über eine vorgegebene Zeitspanne gleich dem Referenzwert sind und/oder innerhalb eines vorgegebenen Wertebereichs um den Referenzwert liegen.

12. Vorrichtung (100, 101) nach Anspruch 11,
weiter umfassend eine in das Gehäuse (3) des Filtermoduls (2) mündende Fluidleitung (5b) zum Einleiten eines Pneumatik-Fluids in das Gehäuse (3), wobei die Drucksteuerungsvorrichtung (10) dazu eingerichtet ist, durch Einleiten des Pneumatik-Fluids in das Gehäuse (3) einen Ausgangsdruck (p₁) in dem Gehäuse auf einen vorgegebenen Wert zu regeln.

13. Vorrichtung (100, 101) nach einem der Ansprüche 11 bis 12,
wobei die Drucksteuerungsvorrichtung (10) eine, insbesondere elektropneumatische, Regeleinheit (11) aufweist.

14. Vorrichtung (100, 101) nach Anspruch 13,
wobei die Messgröße ein von der Regeleinheit (11) ausgegebener Ausgangsdruck (p₁) oder eine mit dem Ausgangsdruck (p₁) korrelierende Größe und der Referenzwert ein Eingangsdruck (p₀) des Druckreglers oder eine mit dem Eingangsdruck (p₀) korrelierende Größe ist

15. Vorrichtung (100, 101) nach einem der Ansprüche 11 bis 14,
wobei die Messgröße ein in dem Gehäuse (3) des Filtermoduls (2) herrschender Druck oder eine von dem in dem Gehäuse (3) des Filtermoduls (2) herrschenden Druck abhängige Größe und der Referenzwert ein Druck-Sollwert ist.

16. Vorrichtung (100, 101) nach einem der Ansprüche 11 bis 13,
wobei die Messgröße ein Filtrat- und/oder Luft-Volumenstrom durch den Filter (4) oder eine einen Filtrat- und/oder Luft-Volumenstrom durch den Filter (4) repräsentierende Größe und der Referenzwert ein Volumenstrom-Wert von Null ist.

## Claims

1. Filtering procedure designed to isolate and/or quantify a substance to be examined from a sample, wherein said procedure comprises the following steps:
- Introduction of a first quantity of the sample, via a sample inlet (3a), into a filter module (2) which has a housing (3) with a first opening forming the sample inlet (3a) and a second opening covered by a filter (4) forming a sample outlet (3b), wherein the filter (4) is designed to retain a first part of the sample and to allow a second part of the sample to pass through, wherein the substance to be examined is contained in the first part of the sample or in the second part of the sample;
- Routing of the sample from the sample inlet (3a) through the filter (4) and the sample outlet (3b) by applying a differential pressure between a side of the filter (4) facing towards the sample inlet (3a) and a side of the filter (4) facing away from the sample inlet (3a), wherein the second part of the sample leaves the filter module (2) as filtrate through the sample outlet (3b);
- While the sample is conducted from the sample inlet (3a) through the filter (4) to the sample outlet (3b),
A series of consecutive measured values of a measured variable representing the differential pressure and/or a volume flow through the filter (4) is recorded; and
- The measured variables are compared with a predefined reference value of the measured variable;
**characterized in that** the filtering procedure further comprises the following step:
- If the measured values of the measured variable that are recorded consecutively are equal to the reference value over a predefined time and/or are within a predefined value range around the reference value, the filtering procedure is stopped.

2. Procedure as claimed in Claim 1,
wherein the reference value is a value which the measured variable adopts if the filter is so clogged by the first part of the sample that the second part of the sample and/or a fluid introduced into the housing to generate a pressure no longer passes through the filter.

3. Procedure as claimed in Claim 1 or 2, further comprising:
After the end of the filtering process, recuperation of the substance to be examined from the first part of the sample retained in the filter module (2) by the filter (4) in the form of a filter cake.

4. Procedure as claimed in one of the Claims 1 to 3, further comprising:
If the second part of the sample essentially leaves the filter module (2) completely before measured values of the measured variable that are recorded consecutively are equal to the reference value over the defined time period and/or are in the predefined value range around the reference value: introduction of a second quantity of the sample via the sample inlet (3a) and conducting of the sample from the sample inlet (3a) through the filter (4) and the sample outlet (3a), and
repetition of these steps until consecutive measured values of the measured variable are equal to the reference value over the predefined time period and/or are within the predefined value range around the reference value.

5. Procedure as claimed in one of the Claims 1 to 4,
wherein the differential pressure is applied by means of a pressure control unit (10) that interacts with the filter module (2) to regulate a pressure present in the housing.

6. Procedure as claimed in one of the Claims 1 to 5,
wherein the measured variable is a pressure present in the housing (3) of the filter module or a variable dependent on the pressure present in the housing (3) of the filter module, and the reference value is a pressure target value.

7. Procedure as claimed in Claim 5 or 6,
wherein the pressure control unit (10) has a control unit (11), particularly electropneumatic, and
wherein the measured variable is an output pressure (p₁) that is output by the control unit (11) or a variable that correlates to the output pressure (p₁), and the reference value is an input pressure (p₀) of the control unit (11) or a variable that correlates to the input pressure (p₀).

8. Procedure as claimed in one of the Claims 1 to 5,
wherein the measured variable is a filtrate and/or air volume flow through the filter (4) or a variable representing a filtrate and/or air volume flow through the filter (4), and the reference value is a volume flow value of zero.

9. Procedure as claimed in one of the Claims 1 to 8,
wherein the substance is a particle type contained in the sample, a cell type, cell components or a molecular substance, particularly macromolecular.

10. Procedure as claimed in one of the Claims 1 to 9,
wherein the differential pressure is applied by means of a pressure control unit (10) interacting with the filter module (2) to regulate a pressure (3) present in the housing, and
wherein the overpressure present in the housing (3) is reduced in order to remove the filter cake and/or before a second quantity of the sample is applied using the pressure control unit (10).

11. Apparatus (100, 101) to filter a sample for the isolation and/or quantification of a substance to be examined, particularly following the procedure as claimed in one of the Claims 1 to 10, said apparatus comprising:
- a filter module (2) comprising a housing (3) with a first opening forming a sample inlet (3a), a filter (4) and a second opening covered by the filter (4) and forming a sample outlet (3b), wherein the filter (4) is designed to retain a first part of the sample and to let a second part of the sample through; and
- a control unit (14) comprising at least a pressure control unit (10), wherein the pressure control unit (10) is designed to generate a differential pressure between a side of the filter (4) facing towards the sample inlet (3a) and a side of the filter (4) facing away from the sample inlet (3a),
wherein the control unit (14) is designed to record measured values of a measured variable representing the differential pressure and/or a volume flow through the filter (4), wherein the control unit (14) is further designed to compare a series of measured values of the measured variable captured consecutively over time with a predefined reference value,
**characterized in that** the control unit (14) is further designed to determine if measured values of the measured variable that are recorded consecutively are equal to the reference value over a predefined period of time and/or are within a predefined value range around the reference value, and wherein the control unit (14) is designed to output a signal to the pressure control unit (10) and/or to a user interface of the apparatus (1) if the measured values of the measured variable recorded consecutively are equal to the reference value over a predefined period of time and/or are within a predefined value range around the reference value.

12. Apparatus (100, 101) as claimed in Claim 11,
further comprising a fluid pipe (5b) entering into the housing (3) of the filter module (2) for the purpose of introducing a pneumatic fluid into the housing (3), wherein the pressure control unit (10) is designed to regulate an output pressure (p₁) in the housing to a predefined value by introducing the pneumatic fluid into the housing (3).

13. Apparatus (100, 101) as claimed in one of the Claims 11 to 12,
wherein the pressure control unit (10) has a control unit (11), particularly electropneumatic.

14. Apparatus (100, 101) as claimed in Claim 13,
wherein the measured variable is an output pressure (p₁) that is output by the control unit (11) or a variable that correlates to the output pressure (p₁), and the reference value is an input pressure (p₀) of the pressure regulator or a variable that correlates to the input pressure (p₀).

15. Apparatus (100, 101) as claimed in one of the Claims 11 to 14,
wherein the measured variable is a pressure present in the housing (3) of the filter module (2) or a variable dependent on the pressure present in the housing (3) of the filter module (2), and the reference value is a pressure target value.

16. Apparatus (100, 101) as claimed in one of the Claims 11 to 13,
wherein the measured variable is a filtrate and/or air volume flow through the filter (4) or a variable representing a filtrate and/or air volume flow through the filter (4), and the reference value is a volume flow value of zero.

## Revendications

1. Procédé de filtration destiné à isoler et/ou à quantifier une substance à analyser à partir d'un échantillon, lequel procédé comprend les étapes suivantes :
- Introduction d'une première quantité de l'échantillon via une entrée d'échantillon (3a) dans un module de filtre (2) comprenant un boîtier (3) avec une première ouverture formant l'entrée d'échantillon (3a) et une deuxième ouverture recouverte par un filtre (4) formant une sortie d'échantillon (3b), le filtre (4) étant adapté pour retenir une première partie de l'échantillon et pour laisser passer une deuxième partie de l'échantillon, la substance à analyser étant contenue dans la première partie de l'échantillon ou dans la deuxième partie de l'échantillon ;
- Acheminement de l'échantillon à partir de l'entrée d'échantillon (3a) à travers le filtre (4) et la sortie d'échantillon (3b) en appliquant une différence de pression entre un côté du filtre (4) faisant face à l'entrée d'échantillon (3a) et un côté du filtre (4) éloigné de l'entrée d'échantillon (3a), la deuxième partie de l'échantillon quittant le module de filtre (2) sous forme de filtrat par la sortie d'échantillon (3b) ;
- Pendant le passage de l'échantillon de l'entrée d'échantillon (3a) à travers le filtre (4) vers la sortie d'échantillon (3b),
Saisie d'une série de valeurs mesurées successives d'une grandeur de mesure représentant la différence de pression et/ou un débit volumique à travers le filtre (4) ; et
- Comparaison des valeurs mesurées avec une valeur de référence prédéfinie de la grandeur de mesure ;
**caractérisé en ce que** le procédé de filtration comprend en outre l'étape suivante :
- Si des valeurs mesurées successivement saisies de la grandeur de mesure sont égales à la valeur de référence pendant une durée prédéfinie et/ou se situent dans une gamme de valeurs prédéfinie autour de la valeur de référence, arrêt du procédé de filtration.

2. Procédé selon la revendication 1,
pour lequel la valeur de référence est une valeur que prend la grandeur de mesure lorsque le filtre est colmaté par la première fraction de l'échantillon de telle sorte que la deuxième fraction de l'échantillon et/ou un fluide introduit dans le boîtier pour générer une pression ne passe plus à travers le filtre.

3. Procédé selon la revendication 1 ou 2, comprenant en outre :
Après l'achèvement du process de filtration, récupération de la substance à analyser à partir de la première partie de l'échantillon retenue dans le module de filtre (2) par le filtre (4) sous forme de gâteau de filtration.

4. Procédé selon l'une des revendications 1 à 3, comprenant en outre :
Si la deuxième partie de l'échantillon quitte quasi complètement le module de filtre (2) avant que des valeurs mesurées successivement saisies de la grandeur de mesure ne soient égales à la valeur de référence sur la période de temps prédéfinie et/ou ne se situent dans la gamme de valeurs prédéfinie autour de la valeur de référence : introduction d'une deuxième quantité de l'échantillon par l'entrée d'échantillon (3a) et passage de l'échantillon de l'entrée d'échantillon (3a) à travers le filtre (4) et la sortie d'échantillon (3a), et répétition de ces étapes jusqu'à ce que les valeurs mesurées successives de la grandeur de mesure soient égales à la valeur de référence sur la période de temps prédéfinie et/ou se situent dans la gamme de valeurs prédéfinies autour de la valeur de référence.

5. Procédé selon l'une des revendications 1 à 4,
pour lequel l'application de la différence de pression est effectuée au moyen d'un dispositif de commande de pression (10) interagissant avec le module de filtre (2) pour ajuster une pression régnant dans le boîtier.

6. Procédé selon l'une des revendications 1 à 5,
pour lequel la grandeur de mesure est une pression régnant dans le boîtier (3) du module de filtre ou une grandeur dépendant de la pression régnant dans le boîtier (3) du module de filtre, et la valeur de référence est une valeur de consigne de pression.

7. Procédé selon la revendication 5 ou 6,
pour lequel le dispositif de commande de pression (10) comporte une unité de régulation (11), notamment électropneumatique, et
pour lequel la grandeur de mesure est une pression de sortie (p₁) délivrée par l'unité de régulation (11) ou une grandeur en corrélation avec la pression de sortie (p₁), et la valeur de référence est une pression d'entrée (p₀) de l'unité de régulation (11) ou une grandeur en corrélation avec la pression d'entrée (p₀).

8. Procédé selon l'une des revendications 1 à 5,
pour lequel la grandeur de mesure est un débit volumique de filtrat et/ou d'air à travers le filtre (4) ou une grandeur représentative d'un débit volumique de filtrat et/ou d'air à travers le filtre (4), et la valeur de référence est une valeur de débit volumique nulle.

9. Procédé selon l'une des revendications 1 à 8,
pour lequel la substance est une variété de particules contenues dans l'échantillon, un type de cellule, des composants cellulaires ou une substance moléculaire, notamment macromoléculaire.

10. Procédé selon l'une des revendications 1 à 9,
pour lequel l'application de la différence de pression est effectuée au moyen d'un dispositif de commande de pression (10) interagissant avec le module de filtre (2) pour régler une pression (3) régnant dans le boîtier, et
pour lequel, pour prélever le gâteau de filtration et/ou avant d'appliquer une deuxième quantité de l'échantillon, on diminue la surpression régnant dans le boîtier (3) au moyen du dispositif de commande de pression (10).

11. Dispositif (100, 101) destiné à la filtration d'un échantillon pour l'isolement et/ou la quantification d'une substance à analyser, notamment d'après le procédé selon l'une des revendications 1 à 10, lequel dispositif comprend :
- un module de filtre (2) comprenant un boîtier (3) avec une première ouverture formant une entrée d'échantillon (3a), un filtre (4) et une deuxième ouverture recouverte par le filtre (4) et formant une sortie d'échantillon (3b), le filtre (4) étant conçu pour retenir une première partie de l'échantillon et pour laisser passer une deuxième partie de l'échantillon ; et
- un dispositif de commande (14) comprenant au moins un dispositif de commande de pression (10), le dispositif de commande de pression (10) étant conçu pour générer une différence de pression entre un côté du filtre (4) faisant face à l'entrée d'échantillon (3a) et un côté du filtre (4) opposé à l'entrée d'échantillon (3a),
le dispositif de commande (14) étant conçu pour mesurer des valeurs mesurées d'une grandeur de mesure représentant la différence de pression et/ou un débit volumique à travers le filtre (4), le dispositif de commande (14) étant en outre conçu pour comparer une série de valeurs mesurées de la grandeur de mesure saisies successivement dans le temps avec une valeur de référence prédéfinie, **caractérisé en ce que** le dispositif de commande (14) est en outre conçu pour déterminer lorsque des valeurs mesurées détectées successivement de la grandeur de mesure sont égales à la valeur de référence sur une période de temps prédéfinie et/ou se situent à l'intérieur d'une gamme de valeurs prédéfinie autour de la valeur de référence, et le dispositif de commande (14) étant conçu pour émettre un signal vers le dispositif de commande de pression (10) et/ou vers une interface utilisateur du dispositif (1) lorsque des valeurs mesurées saisies successivement de la grandeur de mesure sont égales à la valeur de référence sur une période de temps prédéfinie et/ou se situent à l'intérieur d'une gamme de valeurs prédéfinie autour de la valeur de référence.

12. Dispositif (100, 101) selon la revendication 11,
comprenant en outre une conduite de fluide (5b) débouchant dans le boîtier (3) du module de filtre (2) pour introduire un fluide pneumatique dans le boîtier (3), le dispositif de commande de pression (10) étant conçu pour réguler une pression de sortie (p₁) dans le boîtier à une valeur prédéfinie par introduction du fluide pneumatique dans le boîtier (3).

13. Dispositif (100, 101) selon l'une des revendications 11 à 12,
pour lequel le dispositif de commande de pression (10) comporte une unité de régulation (11), notamment électropneumatique.

14. Dispositif (100, 101) selon la revendication 13,
pour lequel la grandeur de mesure est une pression de sortie (p₁) délivrée par l'unité de régulation (11) ou une grandeur en corrélation avec la pression de sortie (p₁), et la valeur de référence est une pression d'entrée (p₀) du régulateur de pression ou une grandeur en corrélation avec la pression d'entrée (p₀).

15. Dispositif (100, 101) selon l'une des revendications 11 à 14,
pour lequel la grandeur de mesure est une pression régnant dans le boîtier (3) du module de filtre (2) ou une grandeur dépendant de la pression régnant dans le boîtier (3) du module de filtre (2), et la valeur de référence est une valeur de consigne de pression.

16. Dispositif (100, 101) selon l'une des revendications 11 à 13,
pour lequel la grandeur de mesure est un débit volumique de filtrat et/ou d'air à travers le filtre (4) ou une grandeur représentative d'un débit volumique de filtrat et/ou d'air à travers le filtre (4), et la valeur de référence est une valeur de débit volumique nulle.
